# EUROPÄISCHE PATENTSCHRIFT

(11) **EP 0 449 188 B1**
(45) Veröffentlichungstag und Bekanntmachung des Hinweises auf die Patenterteilung: **24.11.1993**
(21) Anmeldenummer: 91104713.2
(22) Anmeldetag: 26.03.1991
(51) Int. Cl.: B60B 7/01

(54) **Fahrzeugrad, Felge für Fahrzeugrad und Felgenschutzring**
Vehicle wheel, wheel rim and protective trim
Roue de véhicule, jante de roue et cercle enjoliveur protecteur

(30) Priorität: 27.03.1990 DE 4009757
(43) Veröffentlichungstag der Anmeldung: 02.10.1991
(73) Patentinhaber: Continental Aktiengesellschaft, 30165 Hannover (DE)
(72) Erfinder: Pfeiffer, Hans D., W-3008 Garbsen 4 (DE); Mauruschat, Rainer, W-3008 Garbsen 7 (DE)

(56) Entgegenhaltungen:
- FR-A- 2 328 583
- GB-A- 1 124 726
- US-A- 2 822 219
- US-A- 2 901 292
- US-A- 2 964 354

## Beschreibung

Die Erfindung bezieht sich auf ein Fahrzeugrad bestehend zumindest aus einer Felge mit Felgenhörnern und einem Fahrzeugluftreifen.

Das der Erfindung zugrunde liegende Problem besteht darin, daß die axial äußersten Ränder von Felgen beim Erklimmen von Bordsteinkanten beschädigt werden können. Im harmloseren Fall ist der Schaden ein Metallabrieb vom Felgenhorn, im kritischeren Fall ist der Schaden eine punktuelle Verbiegung des Felgenhornes, die zu einem Rundlauffehler des Rades führen kann. An gegossenen Felgen - beispielsweise aus einer Aluminium- oder Aluminiummagnesiumlegierung - kann der schlimmste Schaden auftreten, daß nämlich die Felge einen Riß bekommt und irgendwann während der Fahrt bricht. Das aufgezeigte Problem taucht insbesondere dort auf, wo die maximale Breite der Felge (zu messen außen über die Felgenhörner) größer ist als die maximale Breite des darauf betriebenen Fahrzeugluftreifens. Diese unglückliche Konstellation tritt inzwischen häufiger auf, weil bei abnehmendem Reifenquerschnitt auch die Ausbauchung der Seitenwand abnimmt.

Es ist bekannt,dieses Problem dadurch zu lösen, daß die axiale Erstreckung des Felgenhornes, insbesondere des äußersten, verrundeten Felgenhornauslaufes, verringert wird. Hierdurch wird der äußerste Rand des Felgenhornes scharfkantiger. Dies führt zu einer höheren Belastung des äußeren Wulstbereiches bei stark eingefedertem Reifen, also insbesondere bei Fahrt mit vermindertem Luftdruck. Der Nachteil der erhöhten Reifenabnutzung am scharfkantigen Felgenhorn fällt ins Gewicht, da ein erheblicher Anteil der Autofahrer nur unzureichend auf die Einhaltung des richtigen Reifenluftdruckes achtet.

Als weitere Lösung des eingangs genannten Problemes ist es bekannt, an dem Fahrzeugluftreifen eine Scheuerleiste anzuordnen, die das Felgenhorn in axialer Richtung überkragt. Bei der bekannten Anordnung ist die Scheuerleiste einstückig mit dem Fahrzeugluftreifen verbunden. Zumindest bei den vorherrschenden Reifen, die nicht seitenorientiert montiert zu werden brauchen, hat diese Lösung jedoch den Nachteil, daß eine solche Scheuerleiste, die grundsätzlich den Materialaufwand bei der Reifenherstellung und in geringem Umfang auch den Spritverbrauch des mit diesem Reifen ausgerüsteten Fahrzeuges erhöht, auf beiden Reifenseitenwänden vorgesehen werden muß. Das zugrunde liegende Problem liegt jedoch nur auf den Reifenseiten vor, die am Fahrzeug montiert nach axial außen weisen.

Nachdem die Erfinder zu der Erkenntnis gelangt sind, daß ein wie auch immer gearteter Felgenhornschutz vorteilhafterweise nur auf einer - nämlich der axial äußeren - Radseite vorzusehen ist, kamen sie auf den Gedanken, auch die bekannten Besfestigungsmöglichkeiten von Radkappen, Zierringen etc. auf Eignung zur Lösung des dargestellten Problemes zu prüfen. Dabei zogen sie insbesondere in Betracht, das deutsche Patent 1 123 932, die US-PS 3,081,132 , 4,523,789 , 3,883,182 , 3,036,866 , 25,397 , 3,597,002 , 3,048,444 sowie die europäische Patentanmeldung und das europäische Patent 0 022 741. Alle in Betracht gezogenen Vorschläge reichten jedoch für die Lösung dieses Problemes aus Festigkeitsgründen nicht aus. Außerdem waren sie teilweise hoch kompliziert.

Aus der US-A-2,822,219 ist ein Fahrzeugrad bestehend im wesentlichen aus einer Felge, einem Luftreifen und einem Zierring bekannt, wobei der - vorzugsweise weiße - Zierring eine andersfarbige Seitenwand eines Luftreifens vortäuschen soll. Der Zierring hat eine erhebliche radiale Erstreckung. Der Weißwandring 31 ist nach radial außen durch den schwarzen Haltering 30 und nach radial innen durch einen Innenring 32 begrenzt. Der Innenring 32 hat offenbar die Aufgabe, den optischen Eindruck zu vermitteln, als ob dort das Felgenhorn säße. Diese Felgenimitation 32 besteht, wie der Beschreibung in der Spalte 3, 2.Absatz, zu entnehmen ist, aus Gummi und verfügt über einen Kabelkern 40.

Die drei Teile 30, 31 und 32 sind unlösbar durch Vulkanisation miteinander verbunden. Die Widerstandsfähigkeit des äußeren Ringes 30 gegenüber fliehkraftbedingter Ablösung nach radial außen von dem Felgenhorn wird nach Zugkraftübertragung über den Weißwandteil 31 letztendlich durch den Kabelkern 40 erzielt.

Dieses Fahrzeugrad, das für Spitzengeschwindigkeiten von etwa 140 km/h gedacht war, benötigt erhebliche Massen, um die erforderliche Halterung zu erzielen. Dies ist von Nachteil, weil diese Massen translatorisch und rotatorisch beschleunigt werden bei jeder Geschwindigkeitsänderung des Fahrzeuges. Weiterhin werden die ungeferten Massen erhöht. Schließlich wird bei diesem Stand der Technik ein Teil der Felgenfläche für die Kühlung durch den Fahrtwind unbrauchbar. Diese Kühlung ist aber erforderlich, um die ansonsten von der Bremse in die Felge abströmende Wärme herunterzukühlen, bevor sie die Reifensitzfläche und damit die empfindliche Wulstzehe erreicht.

Aus der US-A-2,901,292 ist ein weiteres Fahrzeugrad mit an der Felge befestigtem Zierring bekannt, wobei ein Kunststoffteil des Zierringes mit einer im wesentlichen axial verlaufenden Nut den Felgenhornauslauf umgreift. Zur Halterung sind nach diesem Stand der Technik aus Metallblech gebogene blattfederähnliche Teile erforderlich, die sich an einer Radkappe abstützen und den Kunststoffring nach axial innen drücken.

Aus der US-A-2,964,354 , die ebenfalls das Problem der Zierringhalterung betrifft, ist ein weiterer Vorschlag bekannt, die erforderliche Radialkraftabstützung über einen Kern (hier 503) zu erzielen. Zur Verhinderung axialen Abgleitens ist ein weiterer Ring 26 erforderlich, dessen sich im wesentlichen axial erstreckender Querschnitt auf der radial äußeren Seite mit widerhakenartig ausgebildeten umlaufenden Rippen 243 versehen ist. Diese Widerhaken sollen sich unterhalb der Reifensitzfläche mit der Felge verhaken.

Weiterhin gehören zum technischen Umfeld die FR-A-2 328 583 sowie die GB-A-1,124,726.

Der Erfindung liegt die Aufgabe zugrunde, mit möglichst geringem Materialaufwand und ohne Verkleinerung des Felgenhornauslaufes das axial äußere Felgenhorn vor schädlichen Kontakten mit Bordsteinkanten und dergleichen zu schützen.

Die Aufgabe wird erfindungsgemäß durch die Merkmalskombination des Anspruches 1 gelöst. Die Erfindung bedient sich eines Felgenschutzringes gemäß den Merkmalen des Anspruches 6.

Wesentlich ist, daß der für das erfindungsgemäße Fahrzeugrad vorgesehene Schutzring neben einer axial äußeren Zunge auch eine axial innere Zunge aufweist, die zwischen Reifenwulst und Felgenhorn zum Liegen kommt. Um so wenig wie möglich die abgestimmte Geometrie zwischen Felgensitzfläche und Reifenfuß zu stören, sollte diese axial innere Zunge so dünn wie möglich sein. Um gleichzeitig eine hohe Festigkeit zu erreichen, sollte auf der axial inneren Seite des Schutzringes eine Gewebelage einvulkanisiert sein. Bei Verwendung hochwertiger Festigkeitsträger braucht die Wandstärke der axial inneren Zunge des Schutzringes nur 3 bis 7 % der Reifenfußbreite zu betragen. Äußerstenfalls sollte die Wandstärke der axial inneren Zunge des Schutzringes 15 % der Reifenfußbreite betragen.

Wo die Wandstärke der axial inneren Zunge nicht im bevorzugten Bereich von 3 % bis 7 % der Reifenfußbreite liegt, insbesondere in den Fällen, wo die Wandstärke der axial inneren Zunge größer ist, empfiehlt es sich, das Fahrzeugrad mit einer solchen Felge auszurüsten, bei der die Reifensitzbreite auf der Seite, die am Fahrzeug axial außen liegt, um die Wandstärke dieser axial inneren Zunge des Schutzringes größer ist als auf der anderen - also der axial inneren - Radseite. Die Reifensitzbreite sollte also axial außen um 7 % bis 15 % größer sein als axial innen. Auf diese Weise wird eine einwandfreie Funktion des Humps auch bei kräftiger Dimensionierung der axial inneren Zunge erreicht. Allerdings muß dann zwischen Felgen für die Montage mit Schutzring und solchen Felgen für die Montage ohne Schutzring in der gesamten Logistik differenziert werden.

Eine besonders zuverlässige und gleichzeitig kostengünstig zu fertigende Verbindung zwischen der Felge und dem Felgenhornschutzring ist dadurch gekennzeichnet, daß die Verbindung zur Felge durch einen Schnappverschluß dergestalt gebildet ist, daß der Querschnitt der Nut im wesentlichen das Negativ zum Querschnitt des Felgenhornes ist. Dabei ist vorteilhafterweise die Nutweite der Nut zumindest in der Nähe der Nutenöffnung kleiner als die Wandstärke der Felge im entsprechenden Bereich. Ein optimaler Schnappmechanismus wird am Felgenschutzring dadurch verwirklicht, daß sich die Nutweite vom Nutengrund zur Nutenöffnung hin stetig progressiv verkleinert. Durch die verringerte Nutweite im Bereich der Nutenöffnung wird einer Wasserspaltbildung zwischen dem Felgenhorn und der Nutenwandung entgegengewirkt. Dies verhindert eine Korrosion des Felgenhornes.

Insbesondere dann, wenn der Schutzring im wesentlichen aus Gummi oder anderen elastischen Kunststoffen besteht, ist der dargelegte Schnappmechanismus bei einfacher Montage besonders robust.

Um den Gummmiabrieb in der Verbindungsfläche zwischen dem Schutzring und dem Fahrzeugluftreifen möglichst klein zu halten empfiehlt es sich, daß die Shore-Härte des Schutzringes auf seiner axial inneren Seite um höchstens 3 Härtegrade von der Shore-Härte der Außenseite der Seitenwand des Fahrzeugluftreifens abweicht. Um andererseits den Abrieb am Felgenschutzring bei Anscheuerungen an Bordsteinkanten und dergl. gering zu halten empfiehlt es sich weiterhin, daß die Shore-Härte des Schutzringes an seiner axial äußeren Seite größer ist als an der axial inneren Seite. Dies kann durch einen schichtartigen Aufbau erreicht werden.

Vorzugsweise befindet sich an einem erfindungsgemäßen Fahrzeugrad ein Schutzring ausschließlich auf dem Felgenhorn der Felge, das am Fahrzeug axial außen liegt; dadurch bleibt die Radmasse so klein wie möglich.

Die Erfindung wird nachfolgend anhand zweier Figuren näher erläutert. Es zeigt:
- Fig. 1: den Verbindungsbereich zwischen Felge und Luftreifen mit einem Felgenschutzring im Querschnitt und
- Fig. 2: einen unmontierten Felgenschutzring im Querschnitt.

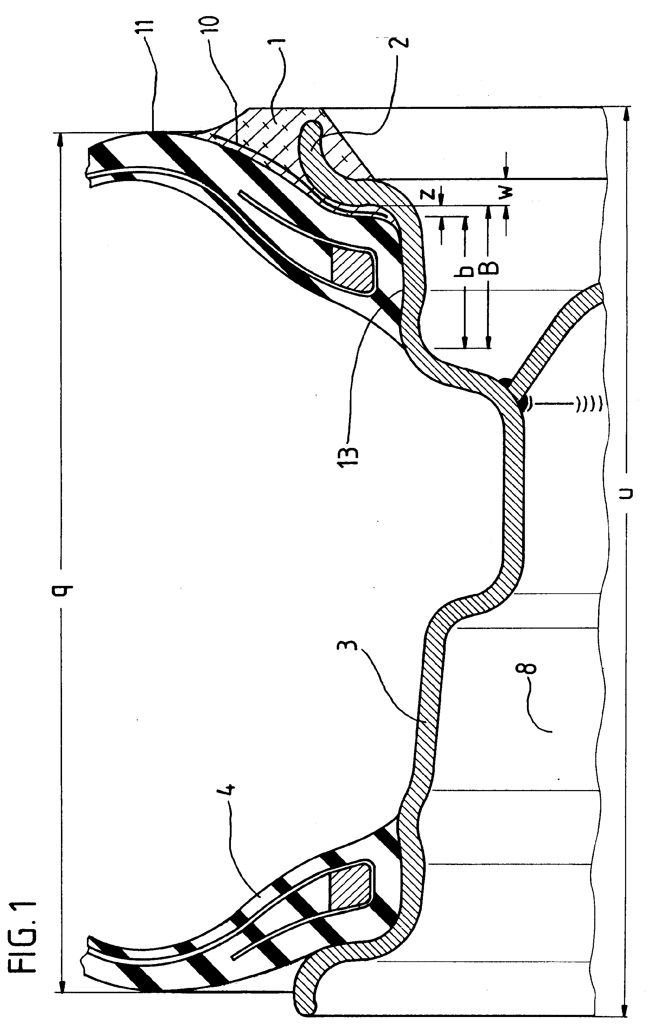

Die Fig. 1 zeigt auf ihrer rechten Seite einen erfindungsgemäßen Schutzring 1 in seiner montierten Stellung auf den Felgenhörnern 2 der Felge 3. Der Fahrzeugluftreifen 4 ist in seiner größten Querabmessung q kleiner als die Breite u über Alles der Felge 3. Aus dieser insbesondere bei Niederquerschnittsreifen anzutreffenden Konstellation ergibt sich das mit der Erfindung gelöste Problem.

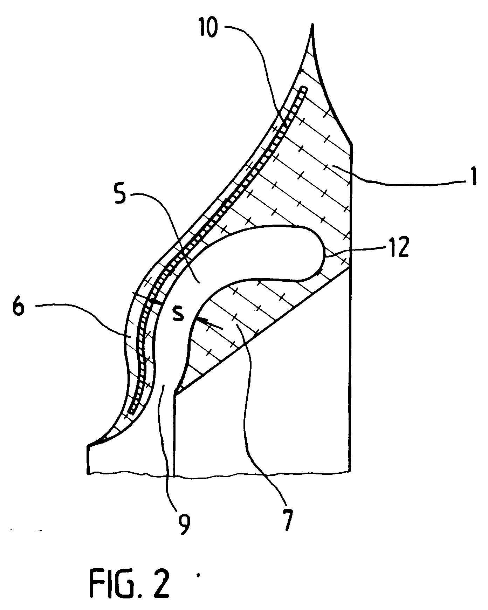

Wesentlich ist, daß der Felgenschutzring 1 nicht am Reifen 4, sondern an den Felgenhörnern 2 befestigt ist. Dazu weist der Schutzring 1, wie in der Fig. 2 dargestellt, eine sich nach radial innen öffnende, den gesamten Umfang durchsetzende Nut 5 auf, welche seitlich durch zwei Zungen 6, 7 begrenzt ist.

Damit am Fahrzeugrad 8 zur Befestigung des Felgenschutzringes 1 nicht irgendwelche kompizierte Mechanismen angeordnet werden müssen, wird die Befestigungsnut 5 so ausgebildet, daß im Querschnitt ihre Krümmung der Felgenhornkrümmung entspricht, die Nutweite s jedoch vom Nutengrund 12 zur Nutenöffnung 9 hin von einem Wert gleich bis 10 % kleiner der in Fig. 1 dargestellten Felgenwandstärke w zu einem Wert von 10 % bis 80 % der Felgenwandstärke w abnimmt. Das Defizit der Nutweite s gegenüber der Felgenhornwandstärke w ist zur Verhinderung eines Wasserspaltes und Gewährleistung sicheren Sitzes umso größer zu wählen, desto größer die Biegewilligkeit der beiden Zungen 6 und 7 ist. Das Defizit sollte zur Nutenöffnung 9 hin progressiv ansteigen.

Wie Fig. 1 zeigt, muß die Reifenfußbreite b zumindest um die Wandstärke z der axial inneren Zunge 6 kleiner sein als die Breite B der entsprechenden Felgensitzfläche 13. Da die Reifenfußbreite b überlicher Reifen um einige Prozent hinter der maximal möglichen Sitzbreite B zurückbleibt, erfordert dies weder am Reifen 4 noch an der Felge 3 irgendwelche Änderungen, solange die Wandstärke z der axial inneren Zunge 6 klein ist. Vorzugsweise beträgt sie nur zwischen 3 % und 7 % der Reifenfußbreite b. Um trotz der geringen Wandstärke z eine hohe Festigkeit zu erzielen, wird die axial innere Zunge 6 zweckmäßigerweise mit einer oder mehreren Festigkeitsträgerlagen 10 verstärkt.

Das Gummi auf der axial inneren Seite des Schutzringes 1 ist in der Shore-Härte so auf das Gummi der anliegenden Seitenwand 11 abgestimmt, daß dort kein signifikanter Abrieb auftritt.

Die Erfindung lehrt einen Felgenschutzring zur Montage auf der axial äußeren Seite eines luftbereiften Fahrzeugrades mit einer besonders einfachen und gleichzeitig wirkungsvollen Verbindungstechnik.

## Patentansprüche

1. Fahrzeugrad (8) bestehend zumindest aus einer Felge (3) mit im Querschnitt gekrümmten Felgenhörnern (2), einem Fahrzeugluftreifen (4) und einem Schutzring (1), wobei, der Schutzring (1) das Felgenhorn (2) in axialer Richtung überragt und von dem Reifen (4) lösbar ist,
**dadurch gekennzeichnet,** daß der Schutzring (1) radial innen etwa auf Höhe der sich axial erstreckenden Felgensitzfläche (13) endet und in der Weise lösbar mit der Felge (3) im Bereich des Felgenhornes (2) verbunden ist, daß das Felgenhorn (2) in eine Formschluß bewirkende Nut (5) auf der radial inneren Seite des Schutzringes (1) eingreift, wobei in an sich bekannter Weise die Nut (5) von einer axial inneren Zunge (6) und einer axial äußeren Zunge (7) begrenzt ist und wobei der Querschnitt der Nut (5) im wesentlichen das Negativ zum Querschnitt des Felgenhornes (2) ist, jedoch die Nutweite (s) der Nut (5) zumindest in der Nähe der Nutenöffnungen (9) kleiner ist als die Wandstärke (w) der Felge (3) im entsprechenden Bereich, wobei sich die Nutweite (s) zur Nutenöffnung (9) hin verkleinert, sodaß zusammen mit besagter Felgenhornkrümmung die Verbindung zur Felge (3) durch einen Schnappverschluß gebildet ist.

2. Fahrzeugrad (8) nach Anspruch 1 dadurch gekennzeichnet, daß die Wandstärke (z) der axial inneren Zunge (6) des Schutzringes (1) 3 % bis 15 % der Reifenfußbreite (b) beträgt.

3. Fahrzeugrad (8) nach Anspruch 1 dadurch gekennzeichnet, daß die Shore-Härte des Schutzringes (1) auf seiner axial inneren Seite um höchstens 3 Härtegrade von der Shore-Härte der Außenseite der Seitenwand (11) des Fahrzeugluftreifens (4) abweicht.

4. Fahrzeugrad (8) nach Anspuch 1 dadurch gekennzeichnet, daß sich ein Schutzring (1) ausschließlich auf dem Felgenhorn (2) der Felge (3) befindet, das am Fahrzeug axial außen liegt.

5. Fahrzeugrad (8) nach Anspuch 1 dadurch gekennzeichnet, daß die Reifensitzbreite (B) der Felge (3) auf der Seite, die am Fahrzeug axial außen liegt, um 7 % bis 15 % größer ist als auf der anderen Seite.

6. Felgenschutzring (1) für Fahrzeugrad (8) gemäß Anspruch 1, der auf der radial inneren Seite eine Nut (5) aufweist, die von einer axial inneren Zunge (6) und einer axial äußeren Zunge (7) seitlich begrenzt ist, wobei im Querschnitt die Wölbung der Nut (5) der Wölbung des zu schützenden Felgenhornes (2) entspricht,
**dadurch gekennzeichnet,** daß der Schutzring (1) auf einer - als "axial innere" bezeichneten - Seite entsprechend der Außenkontur eines Luftreifens (4) im Wulstbereich und radial innerem Seitenwandbereich geformt ist und, daß sich die Nutweite (s) der Nut (5) zur Nutenöffnung (9) hin verkleinert.

7. Felgenschutzring nach Anspruch 6 dadurch gekennzeichnet, daß er (1) im wesentlichen aus Gummi oder anderen elastischen Kunststoffen besteht.

8. Felgenschutzring (1) nach Anspruch 6 dadurch gekennzeichnet, daß die Shore-Härte des Schutzringes (1) an seiner axial äußeren Seite größer ist als an der axial inneren Seite.

9. Felgenschutzring (1) nach Anspruch 7 dadurch gekennzeichnet, daß auf der axial inneren Seite des Schutzringes (1) eine Gewebelage (10) einvulkanisiert ist.

## Claims

1. Vehicle wheel (8), comprising at least one rim (3) which is provided with rim flanges (2) having a curved cross-section, a pneumatic vehicle tyre (4) and a protective ring (1), the protective ring (1) protruding beyond the rim flange (2) in the axial direction and being detachable from the tyre (4), characterised in that the protective ring (1) terminates radially internally substantially on a level with the axially extending rim seating surface (13) and is detachably connected to the rim (3) in the region of the rim flange (2) in such a manner that the rim flange (2) engages in a form-fitting groove (5) in the radially internal surface of the protective ring (1), the groove (5) being defined by an axially internal tongue (6) and an axially external tongue (7) in a manner known per se, and the cross-section of the groove (5) being substantially the negative of the cross-section of the rim flange (2), but the groove width (s) of the groove (5), at least in the vicinity of the groove openings (9), is smaller than the wall thickness (w) of the rim (3) in the corresponding region, the groove width (s) decreasing towards the groove opening (9), so that the connection with the rim (3) is formed by a snap closure, together with said rim flange curvature.

2. Vehicle wheel (8) according to claim 1, characterised in that the wall thickness (z) of the axially internal tongue (6) of the protective ring (1) is 3 % to 15 % of the tyre base width (b).

3. Vehicle wheel (8) according to claim 1, characterised in that the Shore hardness of the protective ring (1) on its axially internal surface differs by a maximum of 3 degrees of hardness from the Shore hardness of the external surface of the lateral wall (11) of the pneumatic vehicle tyre (4).

4. Vehicle wheel (8) according to claim 1, characterised in that a protective ring (1) is situated exclusively on the rim flange (2) of the rim (3), which flange lies axially externally on the vehicle.

5. Vehicle wheel (8) according to claim 1, characterised in that the tyre seating width (B) of the rim (3), on the side lying axially externally on the vehicle, is greater by 7 % to 15 % than on the other side.

6. Rim protective ring (1) for a vehicle wheel (8) according to claim 1, which has on the radially internal surface, a groove (5) which is laterally defined by an axially internal tongue (6) and an axially external tongue (7), the curved portion of the groove (5) corresponding in cross-section to the curved portion of the rim flange (2) to be protected, characterised in that, on a surface referred to as the "axially internal" surface, the protective ring (1) is shaped to correspond to the external configuration of a pneumatic tyre (4) in the bead region and radially internal lateral wall region, and in that the groove width (s) of the groove (5) decreases towards the groove opening (9).

7. Rim protective ring according to claim 6, characterised in that the ring (1) is substantially formed from rubber or other resilient plastics materials.

8. Rim protective ring (1) according to claim 6, characterised in that the Shore hardness of the protective ring (1) on its axially external surface is greater than on the axially internal surface.

9. Rim protective ring (1) according to claim 7, characterised in that a fabric ply (10) is vulcanised-in on the axially internal surface of the protective ring (1).

## Revendications

1. Roue de véhicule (8) constituée d'au moins une jante (3) avec des cornes de jante (2) de section transversale courbée, un pneumatique de véhicule (4) et un cercle de protection (1), dans laquelle le cercle de protection (1) dépasse axialement de la corne de jante (2) et peut être détaché du pneu (4), caractérisée en ce que le cercle de protection (1) se termine radialement à l'intérieur à peu près à hauteur de la surface du plat de jante (13) s'étendant axialement et est assemblé de manière amovible avec la jante (3), dans la zone de la corne de jante (2), de manière que celle-ci s'engage dans une rainure (5), réalisant l'assemblage par concordance de forme, sur le côté radialement intérieur du cercle de protection (1), la rainure (5) étant limitée, de manière connue, par une languette (6) axialement intérieure et une languette (7) axialement extérieure et la section transversale de la rainure (5) étant essentiellement le négatif de la section transversale de la corne de jante (2), la largeur (s) de la rainure (5) étant toutefois inférieure, au moins à proximité des ouvertures (9) de la rainure, à l'épaisseur (w) de la paroi de la jante (3) dans la zone correspondante, la largeur (s) de la rainure diminuant vers l'ouverture (9), de sorte qu'avec ladite courbure de la corne de jante la liaison avec la jante (3) est formée par une fermeture à déclic.

2. Roue de véhicule (8) selon la revendication 1, caractérisée en ce que l'épaisseur (z) de la paroi de la languette (6) axialement intérieure du cercle de protection (1) est comprise entre 3 % et 15 % de la largeur (b) du pied du pneu.

3. Roue de véhicule (8) selon la revendication 1, caractérisée en ce que la dureté Shore du cercle de protection (1) sur son côté axialement intérieur diffère de 3 degrés au plus de la dureté Shore du côté extérieur de la paroi latérale (11) du pneu (4) du véhicule.

4. Roue de véhicule (8) selon la revendication 1, caractérisée en ce qu'un cercle de protection (1) se trouve exclusivement sur la corne (2) de la jante (3) qui se situe axialement à l'extérieur sur le véhicule.

5. Roue de véhicule (8) selon la revendication 1, caractérisée en ce que la largeur (B) du plat de la jante (3) sur le côté qui se situe axialement à l'extérieur du véhicule, est entre 7 % et 15 % supérieure à celle de l'autre côté.

6. Cercle de protection de jante (1) pour roue de véhicule (8) selon la revendication 1, qui présente sur le côté radialement intérieur une rainure (5) qui est limitée latéralement par une languette (6) axialement intérieure et une languette (7) axialement extérieure, la section transversale de la courbure de la rainure (5) correspondant à la courbure de la corne de jante (2) à protéger, caractérisé en ce que le cercle de protection (1) est formé sur un côté - désigné comme "axialement intérieur"- conformément au contour extérieur d'un pneumatique (4) dans la zone du talon et dans la zone de paroi latérale radialement intérieure et en ce que la largeur (s) de la rainure (5) diminue vers l'ouverture (9) de la rainure.

7. Cercle de protection de jante (1) selon la revendication 6, caractérisé en ce qu'il (1) est essentiellement réalisé en caoutchouc ou dans d'autres matières synthétiques, élastiques.

8. Cercle de protection de jante (1) selon la revendication 6, caractérisé en ce que la dureté Shore du cercle de protection (1) est plus grande sur son côté axialement extérieur que sur le côté axialement intérieur.

9. Cercle de protection de jante (1) selon la revendication 7, caractérisé en ce que sur le côté axialement intérieur du cercle de protection (1) est vulcanisée une couche de tissu (10).
